(19) Europäisches Patentamt
European Patent Office
Office européen des brevets

(11) Publication number: **0 149 835**
**B1**

(12) # EUROPEAN PATENT SPECIFICATION

(45) Date of publication of patent specification: **05.10.88**

(51) Int. Cl.$^4$: **C 08 G 73/00,** C 08 G 12/40, H 01 B 1/12

(21) Application number: **84116043.5**

(22) Date of filing: **21.12.84**

(54) **Electrically conductive polymers based on polyazomethines and process for preparing same.**

(30) Priority: **22.12.83 IT 2432183**

(43) Date of publication of application:
**31.07.85 Bulletin 85/31**

(45) Publication of the grant of the patent:
**05.10.88 Bulletin 88/40**

(84) Designated Contracting States:
**BE DE FR GB IT NL**

(56) References cited:
**US-A-3 516 971**

**MACROMOLECULES, vol. 16, no. 1, January 1983, pages 128-136, American Chemical Society; E.W. NEUSE et al.: "Two-stage polybenzimidazole synthesis via poly(azomethine) intermediates"**

**DIE ANGEWANDTE MAKROMOLEKULARE CHEMIE, vol. 93, no. 1408, February 1981, pages 189-198, Hüthig & Wepf Verlag, Heidelberg, DE; B.P. SUTHAR et al.: "New organic polymers, I. Synthesis and characterization of poly schiff bases from benzidine-3,3'-dicarboxylic acid"**

(73) Proprietor: **Montedison S.p.A.**
**31, Foro Buonaparte**
**I-20121 Milan (IT)**

(72) Inventor: **Bossi, Furio**
**79, via atanasio II**
**Roma (IT)**
Inventor: **Caldo, Cornelio**
**3, via Giosuè Borsi**
**Terni (IT)**

(74) Representative: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

**EP 0 149 835 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to new electrically conductive polymers belonging to the class of the polyazomethines having high conductivity values, and to the process for preparing the same.

It is known in the literature to use, in the field of the conductive polymers, polyazomethines obtained by polycondensation reaction of bicarbonyl compounds, such as aromatic diketones and diamines. Polyazomethines having the unit:

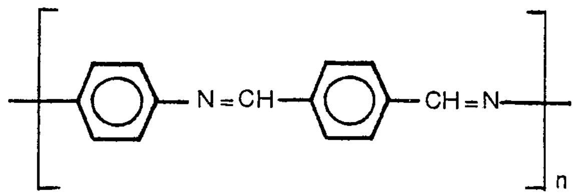

show conductivity values of the order of $10^{-13}$ $ohm^{-1}$ $cm^{-1}$ at a temperature of 25°C. However, these conductivity values are too low to permit the practical utilization of the polyazomethines in the field of the elctrically conductive polymers.

In Journal Applied Polymer Science 20, 1985 (1982) there are described polyazomethines obtained by polycondensation of 4,4'-diacetyldiphenylether, utilized as bicarbonyl compound, with aliphatic or aromatic diamines.

The electrical conductivity values measured at 30°C are in the range of from 1.63 . $10^{-16}$ to 3.55 . $10^{-11}$ $ohm^{-1}$ $cm^{-1}$. The conductivity values at a temperature of 25°C are slightly lower than the above-cited values.

The above conductivity values are still too low as to permit to utilize in practice the polyazomethines in the field of the electrically conductive polymer.

In the development of the polyazomethines the necessity was felt of increasing the electrical conductivity in order to permit their practical utilization.

It has now surprisingly been found that with the process of the present invention it is possible to prepare a new type of polyazomethines having electrical conductivity values higher of about hundred times than the ones known in the art.

The polyazomethines forming the object of the present invention are obtainable by polycondensation reaction between a bicarbonyl compound with an aromatic diamine having the general formula: $H_2N—Ar—CH_2—Ar—NH_2$ in which Ar is an aryl group, optionally substituted, at a temperature of 50 to 200°C and in a molar ratio between the diamine and the bicarbonyl compound from 1:0.9 to 1:1.2, and by subsequent oxidation in order to transform at least a part of the methylene groups of the diamine into carbonyl groups by using chromic anhydride or mixtures of alkaline metal dichromate and sulphuric acid at temperatures in the range of from room temperature to 150°C.

The utilizable bicarbonyl compounds are both aliphatic and aromatic.

The bicarbonyl compounds which can be used in the polycondensation reaction are the diketones and the dialdehydes, in which the two carbonyl groups are linked together, or to a linear or branched saturated aliphatic chain containing from 1 to 20 C atoms, or to an aryl, diaryl or arylalkyl chain from 6 to 20 C atoms, and in the case of diketones the other valence of the two carbonyl groups is linked to a radical R having the same meaning of the chain above.

The aliphatic, diaryl or arylalkyl chain between the two carbonyl groups may also comprise an ether group.

The preferred compounds are glyoxal, alkyl, aryl or alkylarylglyoxal, in which alkyl contains from 1 to 20 C atoms and aryl or alkylaryl contains from 60 to 20 C atoms, 4,4'-diacetylphenylmethane and 4,4'-diacetyldiphenylether.

Examples of diketones and dialdehydes are methylphenylglyoxal, phenylglyoxal, dimethylglyoxal and paraquinones. Other bi-carbonyl compounds also usable are those in which the two carbonyl groups have a valence saturated with an OR'-group in which R' has the same meaning of R above, for example: RCO—COOR', R'O—CO—CO—OR', or R'O—CO — chain — CO — OR'. An example of these compounds are the glyoxalates like methylphenylglyoxalate.

The aromatic diamines which are utilizable and preferred according to the process of the invention are those in which Ar is a phenyl or phenylene group, respectively. Examples are 4,4'-diaminodiphenylmethane, 2,4'-diaminodiphenylmethane and mixtures thereof.

However, it is possible to use aromatic diamines containing substituents in the aromatic ring such as, for example, alkyl groups.

Examples of these diamines are 4,4'-diamino-2,2'-dimethyldiphenylmethane, 4,4'-diamino-2,2'-di-n-octyldiphenylmethane and so on.

The polycondensation reaction is carried out at temperatures ranging from 50° to 200°C and for times depending on the reactivity of the reagents. Generally, the time ranges from 10 minutes to 20 hours.

Polycondensation can be conducted in the presence or in the absence of solvents.

Employable solvents are for example water, alcohols, hydrocarbons, ethers. It is essential that the

solvent used does not contain carbonyl groups or aminic groups as these groups would interfere during the polycondensation reaction.

The preferred solvents are water and alcohols such as, for example, amyl alcohol and butyl alcohol.

In the polycondensation reaction, the molar ratios between diamine and bicarbonyl compound range from 1:0.9 and 1:1.2.

Molar ratios of 1:1 are preferred.

As already mentioned hereinbefore, the polyazomethines obtained by polycondensation are then subjected to an oxidation reaction in order to transform the methylene groups of the diamines in whole, or in part, into carbonyl groups.

The oxidation reaction is carried out by using chromic anydride or mixtures of alkaline metal dichromate and sulphuric acid as oxidizing agent.

The oxidation reaction is carried out at temperatures ranging from room temperature to 150°C and for times of from 10 minutes to 5 hours.

The polyazomethines prepared according to the process of this inventiion are characterized by the inherent viscosity value determined at 25°C in solutions at 0.5% by weight of polyazomethines in chloroform, by the resistivity value in ohm cm determined according to ASTM standard D—257—66/72, at a temperature of 25°C. The determination of the carbonyl group, which is contained in the polyazomethines and derives from the oxidation of the methylene group contained in the diamines, was done by means of infrared spectra.

The polyazomethines obtained show electrical conductivity values by hundred times higher than the ones known in the art, and they can be used as usual electrically conductive materials, disc supports, supports for integrated circuits and as electronic materials in general.

The electrical conductivity of the polyazomethines of this invention can be further increased by addition of doping agents. Such agents are added in the amounts and according to techniques known in literature.

Useful doping agents are for example indium, antimony pentafluoride or pentachloride, boron trifluoride or trichloride, ammonia, methylamine, tetracyanoquinodimethane.

Generally, the amount of doping agent ranges from 0.1 g to 20 g for ——— kg of polymer.

## Example 1

Preparation of polyazomethine by polycondensation reaction.

Into a three-neck glass flask having a capacity of 1 l, equipped with a stirrer, a thermometer and a reflux cooler, there were introduced:

| | |
|---|---|
| —4,4'-diaminodiphenylmethane | 39.6 g (0.2 moles) |
| —4,4'-diacetyldiphenylether | 40.8 g (0.2 moles) |
| —amyl alcohol | 400 ml |

It was heated at reflux during 8 hours. A sample was drawn from the slurry, the formed polyazomethine was filtered and it was dried at 60°C at a reduced pressure. The polymer appeared as a brown solid having:

| | |
|---|---|
| — $\eta_{inh}$, at 25°C, in a solution at 0.5% by weight in chloroform: | 0.04 dl/g |
| —resistivity at 25°C (ohm × cm): | $5.00 \times 10^{11}$ |
| —conductivity at 25°C ($ohm^{-1} \times cm^{-1}$): | $0.20 \times 10^{11}$ |

Preparation of the oxidized polyazomethine.

To the solution as obtained hereinbefore there were added, for oxidizing the methylene groups of the polyazomethine:

| | |
|---|---|
| —potassium dichromate | 60 g |
| —concentrated sulphuric acid | 80 g |

It was heated at reflux for 30 minutes, then it was neutralized with an aqueous solution of sodium carbonate. The aqueous solution, green due to chromic acid, was separated in a separatory funnel, and the residue was evaporated under reduced pressure.

A brown solid was obtained which, on infrared examination, exhibited the bands which are characteristic of the carbonyl groups, and whose properties were as follows:

| | |
|---|---|
| esistivity at 25°C (ohm × cm): | $1.80 \times 10^{9}$ |
| —conductivity at 25°C ($ohm^{-1} \times cm^{-1}$): | $0.60 \times 10^{-9}$ |

## Example 2

Preparation of polyazomethine by polycondensation reaction.

Into a glass, three-neck, 1-liter flask equipped with a stirrer, a thermometer and a reflux cooler, there were introduced:

| | |
|---|---|
| —4,4'-diaminodiphenylmethane | 39.6 g (0.2 moles) |
| —glyoxal | 11.6 g (0.2 moles) |
| —water | 40 ml |

It was heated at reflux during 2 hours. A sample was drawn from the slurry, the formed

polyazomethine was filtered and it was dried at 60°C under reduced pressure. The polymer was in the form of a brown solid having the following properties:

— resistivity at 25°C (ohm × cm): $4.00 \times 10^{14}$
— conductivity at 25°C ($ohm^{-1} \times cm^{-1}$): $0.25 \times 10^{-14}$

Preparation of the oxidized polyazomethine

To the solution so obtained and cooled down to room temperature, an oxidizing solution consisting of:

— potassium dichromate 60 g
— Concentrated sulphuric acid 80 g

water added.

It was heated at reflux for 30 minutes, then it was neutralized with an aqueous solution of sodium carbonate. It was filtered, washed with water and dried at 60°C under reduced pressure.

A brown solid was obtained which, on I.R. examination, exhibited the bands typical of the carbonyl groups and the following properties:

— resistivity at 25°C (ohm × cm): $2.00 \times 10^{11}$
— conductivity at 25°C ($ohm^{-1} \times cm^{-1}$): $0.50 \times 10^{-11}$

Example 3

Into a three-neck pyrex flask, equipped with a stirrer, a thermometer and a reflux cooler, there were introduced:

— oxidized polyazomethine, prepared acccording to example 2: 50 g
— methanol: 300 ml
— methanol solution at 1% by weight of tetracyanoquinodimethane: 50 ml

It was stirred for 30 minutes at room temperature.

The solvent was evaporated under reduced pressure.

A brown solid was obtained, which showed the following properties:

— resistivity at 25°C (ohm × cm): $2.80 \times 10^{8}$
— conductivity at 25°C ($ohm^{-1} \times cm^{-1}$): $0.36 \times 10^{-8}$

**Claims**

1. Polyazomethines having high electrical conductivity obtainable by polycondensation reaction of a bicarbonyl compound with an aromatic diamine of formula: $H_2N—Ar—CH_2—Ar—NH_2$, in which Ar is an aryl group, optionally substituted, at a temperature of 50 to 200°C and in a molar ratio between the diamine and the bicarbonyl compound from 1:0.9 to 1:1.2, and by subsequent oxidation reaction of at least a part of the methylene groups of the diamine to carbonyl groups by using chromic anydride or mixtures of alkaline metal dichromate and sulphuric acid at temperatures in the range of from room temperature to 150°C.

2. The polyazomethines according to claim 1, in which the bicarbonyl compounds are selected from diketones and dialdehydes, in which the two carbonyl groups are linked together, or to a linear or branched saturated aliphatic chain containing from 1 to 20 C atoms, or to an aryl, diaryl or arylalkyl chain from 6 to 20 C atoms and in the case of diketones the other valence of the two carbonyl groups is linked to a radical R having the same meaning of the chain above.

3. The polyazomethines according to claim 2, in which the aliphatic, diaryl, or arylalkyl chain between the two carbonyl groups comprises an ether group.

4. The polyazomethines according to claim 2, in which the bicarbonyl compounds are selected from glyoxal, alkyl, aryl or alkylarylglyoxal, in which alkyl contains from 1 to 20 C atoms and aryl or alkylaryl contains from 6 to 20 C atoms, 4,4'-diacetyldiphenylmethane and 4,4'-diacetyldiphenylether.

5. The polyazomethines according to claim 1, in which Ar of the diamines is phenyl or phenylene, respectively.

6. The polyazomethines according to claim 1, in which the diamine is selected from 4,4'-diaminodiphenylmethane and 2,4'-diaminodiphenylmethane.

7. The polyazomethines according to claim 1, characterized in that doping agents are added thereto.

8. The polyazomethines according to claim 8, in which the doping agents are selected from amongst iodine, antiomy pentafluoride or pentachloride, boron trifluoride or trichloride, ammonia, methylamine, tetracyanoquinodimethane.

9. A process of preparing polyazomethines according to the preceding claims, characterized in that the bicarbonyl compound and the diamine are reacted in the presence of a solvent at temperatures ranging from 50° to 200°C and in a molar ratio between the diamine and the bicarbonyl compound from 1:0.9 to 1:1.2, and the subsequent oxidation reaction is carried out with chromic anhydride or mixtures of alkaline metal dichromates and sulphuric acid at temperatures in the range of from room temperature to 150°C.

**Patentansprüche**

1. Polyazomethine mit hoher elektrischer Leitfähigkeit, erhältlich durch Polykondensationsreaktion einer Bicarbonyl-Verbindung mit einem aromatischen Diamin der Formel $H_2N—Ar—CH_2—Ar—NH_2$, worin Ar eine gegebenenfalls substituierte Arylgruppe darstellt, bei einer Temperatur von 50 bis 200°C und in

einem Mol-Verhältnis zwischen dem Diamin und der Bicarbonyl-Verbindung von 1:0,9 bis 1:1,2 und durch anschließende Oxydationsreaktion zumindest eines Teils der Methylen-Gruppen des Diamins zu Carbonyl-Gruppen unter Verwendung von Chromsäureanhydrid oder Mischungen von Alkalimetalldichromat und Schwefelsäure bei Temperaturen im Bereich von Raumtemperatur bis 150°C.

2. Polyazomethine gemäß Anspruch 1, worin die Bicarbonyl-Verbindungen ausgewählt sind unter Diketonen und Dialdehyden, bei denen die beiden Carbonyl-Gruppen miteinander verbunden oder an eine lineare oder verzweigte gesättigte aliphatische Kette mit 1 bis 20 C-Atomen oder an eine Aryl-, Diaryl- oder Arylalkyl-Kette mit 6 bis 20 Kohlenstoffatomen gebunden sind, und im Fall der Diketone die andere Valenz der beiden Carbonyl-Gruppen an einen Rest R mit der gleichen Bedeutung wie derjenigen der vorstehenden Kette gebunden ist.

3. Polyazomethine gemäß Anspruch 2, worin die aliphatische Diaryl- oder Arylalkyl-Kette zwischen den beiden Carbonyl-Gruppen eine Äthergruppe umfaßt.

4. Polyazomethine gemäß Anspruch 2, worin die Bicarbonyl-Verbindungen unter Glyoxal, Alkyl-, Aryl oder Alkylarylglyoxal, worin Alkyl 1 bis 20 Kohlenstoffatome und Aryl oder Alkylaryl 6 bis 20 Kohlenstoffatome enthält, 4,4'-Diacetyldiphenylmethan und 4,4'-diacetyldiphenyläther ausgewählt sind.

5. Polyazomethine gemäß Anspruch 1, worin Ar der Diamine Phenyl bzw. Phenylen ist.

6. Polyazomethine gemäß Anspruch 1, worin das Diamin unter 4,4'-Diaminodiphenylmethan und 2,4'-Diaminodiphenylmethan ausgewählt ist.

7. Polyazomethine gemäß Anspruch 1, dadurch gekennzeichnet, daß ihnen Dotierungsmittel zugesetzt sind.

8. Polyazomethine gemäß Anspruch 8, worin die Dotierungsmittel unter Jod, Antimonpentafluorid oder -pentachlorid, Bortrifluorid oder -trichlorid, Ammoniak, Methylamin, Tetracyanochinodimethan ausgewählt sind.

9. Verfahren zur Herstellung von Polyazomethinen gemäß den vorhergehenden Ansprüchen, dadurch gekennzeichnet, daß die Bicarbonyl-Verbindung und das Diamin in Answesenheit eines Lösungsmittels bei Temperaturen von 50 bis 200°C und in einem Mol-Verhaltnis zwischen dem Diamin und der Bicarbonyl-Verbindung von 1:0,9 bis 1:1,2 umgesetzt werden, und die anschließende Oxydationsreaktioin mit Chromsäureanhydrid oder Mischungen von Alkalimetalldichromaten und Schwefelsäure bei Temperaturen im Bereich von Raumtemperatur bis 150°C durchgeführt werden.

**Revendications**

1. Polyazométhines présentant une conductivité électrique élevée obtenue par une réaction de polycondensation d'un dérivé bicarbonyle avec une amine bi-aromatique de formule: $H_2N—Ar—CH_2—Ar—NH_2$ dans laquelle:

Ar représente un groupe aryle, éventuellement substitué, à une température de 50°C à 200°C et dans un rapport molaire diamine/dérivé bicarbonylé compris entre 1/0,9 et 1/1,2 et par une réaction ultérieure d'oxydation d'au moins une partie des groupes méthylènes de la diamine en groupes carbonyles par utilisation d'anydride chromique ou de mélanges de dichromate de métal alcalin et d'acide sulfurique à des températures comprises entre la température ambiante et 150°C.

2. Les polyazométhines selon la revendication 1, dans lesquelles les dérivés bicarbonylés sont choisis parmi les dicétones et les dialdéhydes, dans lesquels les deux groupes carbonyles sont liés entre eux, ou à une chaîne aliphatique saturée linéaire ou ramifiée contenant de 1 à 20 atomes de carbone ou à une chaîne aryle, diaryle ou arylalkyle renfermant de 6 à 20 atomes de carbone et, dans le cas des dicétones, l'autre valence des deux groupes carbonyles est liée à un radical R présentant la même signification de chaîne que ci-dessus.

3. Les polyazométhines selon la revendication 2, dans lesquelles la chaîne aliphatique, diaryle ou arylalkyle se trouvant entre les deux groupes carbonyles, comprend un groupe éther.

4. Les polyazométhines selon la revendication 2, dans lesquelles les dérivés bicarbonylés sont choisis parmi le glyoxal, un alkyle, aryle ou alkylarylglyoxal, dans lesquels le radical alkyle contient de 1 à 20 atomes de carbone et le radical aryle ou alkylaryle contient de 6 à 20 atomes de carbone, le 4,4'-diacétyldiphénylméthane et le 4,4'-diacétyldiphényléther.

5. Les polyazométhines selon la revendication 1, dans lesquelles le radical Ar de la diamine représente le radical phényle ou phénylène respectivement.

6. Les polyazométhines selon la revendication 1, dans lesquelles la diamine consiste en 4,4'-diaminodiphénylméthane ou 2,4'-diaminodiphénylméthane.

7. Les polyzométhines selon la revendication 1, caractérisées en ce que l'on y ajoute des agents de dopage.

8. Les polyazométhines selon la revendication 8, dans lesquelles les agents de dopage sont choisis parmi l'iode, le pentafluorure ou le penachlorure antimoine, le trifluoroure ou le trichlorure de bore, l'ammoniac, la méthylamine et le tétracyanoquinodiméthane.

9. Un procédé de préparation de polyazométhines selon les revendications précédentes, caractérisé en ce que l'on fait réagir le dérivé bicarbonyle et la diamine en présence d'un solvant, à des températures comprises entre 50°C et 200°C et dans un rapport molaire diamine/dérivé bicarbonyle compris entre 1/0,9 et 1/1,2 et en ce que la réaction d'oxydation ultérieure est effectuée à l'aide d'anhydride chromique ou de

mélanges de bichromate de métal alcalin et d'acide sulfurique à des températures comprises entre la température ambiante et 150°C.